# EUROPÄISCHE PATENTANMELDUNG

(11) **EP 4 633 130 A1**
(43) Veröffentlichungstag der Anmeldung: **15.10.2025**
(21) Anmeldenummer: 24169750.7
(22) Anmeldetag: 11.04.2024
(51) Int. Cl.: H04N 7/10

(54) **VERSTÄRKERVORRICHTUNG ZUR ANBINDUNG AN BREITBANDNETZ**

(71) Anmelder: DCT Delta AG, 78351 Bodman-Ludwigshafen (DE)
(72) Erfinder: Maier, Stephan, 78351 Bodman-Ludwigshafen (DE)
(74) Vertreter: Patent- und Rechtsanwälte Behrmann Wagner PartG mbB

(57) **Zusammenfassung**

Die vorliegende Erfindung betrifft eine Verstärkervorrichtung (10) Anbindung an ein Kabelfernseh- und/oder Breitbandnetzwerk aufweisend einen ersten und zweiten Leistungsteiler (1,2) und zwischen diesen angeordnete Verstärkerelemente (3,4) zur jeweiligen Verstärkung eines Upstream oder Downstream-Signals (5a,5b).

## Beschreibung

Die vorliegende Erfindung betrifft eine Verstärkervorrichtung zur Anbindung an ein Kabelfernseh- und/oder Breitbandnetzwerk.

Vorrichtungen und Systeme zur Anbindung an ein Kabelfernseh- und/oder Breitbandnetzwerk sind aus dem Stand der Technik hinreichend bekannt. Hierfür werden sogenannte Verstärkervorrichtungen eingesetzt, welche die Aufgabe haben, die Übertragung von elektronischen Signalen in einem Kabelnetzwerk zu verstärken, wobei insbesondere schwache Signale verstärkt werden, die über große Entfernungen im Kabelnetzwerk übertragen werden. Diese Signale können von zentralen Hubs oder Kopfstellen zu den Endbenutzern (Downstream) oder von den Endbenutzern zurück zu den Kopfstellen (Upstream) übertragen werden. Die Verstärkervorrichtungen sind dabei ausgebildet, die Amplitude dieser Signale zu erhöhen, um sicherzustellen, dass sie über die gesamte Netzwerkinfrastruktur effektiv übertragen werden können. Die Downstream- und Upstream-Signale werden dabei in verschiedene Frequenzbereiche getrennt, wobei Upstream-Signale üblicherweise niedrigere Frequenzen und Downstream-Signale höhere Frequenzen verwenden. Da Verstärker nur in eine Richtung arbeiten, sind separate Verstärker für Downstream- und Upstream-Signale erforderlich, da die Signale im Netzwerk in beide Richtungen übertragen werden.

Derzeit gibt es verschiedene Branchenstandards für die Aufteilung des Frequenzspektrums zwischen Upstream- und Downstream-Signalen, welche in der Cable Labs DOCSIS1-Spezifikation (ITU-T Recommendation J.112) ratifiziert sind. So definiert der DOCSIS 3.0 Standard maximal 85/108 MHz, d.h. bis zu 85 MHz für Upstream-Signale und ab 108 MHz für Downstream-Signale. DOCSIS 3.1 unterstützt ein Frequenzspektrum bis 204 MHz im Upstream und von 258 MHz bis zu 1,8 GHz im Downstream. DOCSIS 4.0 repräsentiert ein erweitertes Spektrum von 5 bis 684 MHz im Upstream und 108 MHz bis 1,8 GHz im Downstream, wobei die genaue Frequenzaufteilung und die Bandbreitenparameter zusätzlich vom jeweiligen Breitbandnetzwerkbetreiber abhängen kann, so dass von Region zu Region und von Betreiber zu Betreiber Unterschiede im jeweiligen Frequenzspektrum auftreten können. Eine jeweilige Änderung oder Anpassung der Frequenzaufteilung erfordert hierbei Anpassungen an Netzwerkkomponenten wie den Signalfiltern innerhalb von Verstärkern, was zeitaufwändig und kostspielig sein kann.

Aus der GB 2523332A ist eine bidirektionale Verstärkervorrichtung für den Einsatz in einem Kabelfernseh- oder Breitbandnetzwerk bekannt, welcher Upstream und Downstream Verstärkereinheiten umfasst, die über Richtkoppler mit den Upstream und Downstream Leitungen verbunden sind. Die Verwendung von Richtkopplern anstelle von Diplexfiltern ermöglicht es, die fest definierten Frequenzsplits bezüglich der einzelnen DOCSIS-Spezifikationen zwischen Upstream and Downstream Signalen zu kombinieren, ohne verschiedene Filtermodule (Diplexer) im Verstärker zu verändern. Diese Vorrichtung hat jedoch den Nachteil, dass die Trennung und Übertragung der Upstream und Downstream Signale über einen breiten Frequenzbereich nicht zuverlässig ist.

Ausgehend von dem vorgenannten Stand der Technik liegt der Erfindung die Aufgabe zugrunde, eine verbesserte Verstärkervorrichtung bereitzustellen, welche eine zuverlässige Übertragung und Verstärkung der Upstream und Downstream Signale ermöglicht und gleichzeitig konstruktiv einfach aufgebaut ist.

Gelöst wird diese Aufgabe durch eine Verstärkervorrichtung mit den Merkmalen des unabhängigen Anspruchs. Die abhängigen Ansprüche beschreiben vorteilhafte Weiterbildungen der vorliegenden Erfindung.

In einem ersten Aspekt betrifft die vorliegende Erfindung eine Verstärkervorrichtung zur Anbindung an ein Kabelfernseh- und/oder Breitbandnetzwerk, aufweisend einen ersten und zweiten Leistungsteiler und zwischen diesen angeordnete Verstärkerelemente zur jeweiligen Verstärkung eines Upstream oder Downstream-Signals, wobei der erste und zweite Leistungsteiler jeweils als ein System für die Impedanzrichtige additive und subtraktive Mischung der Upstream und Downstream Signale ausgebebildet ist.

Die erfindungsgemäße Verstärkervorrichtung ermöglicht eine einfache und variable Anbindung an ein Kabelfernseh- und/oder Breitbandnetzwerk, wobei etwaige Frequenzanpassungen für Upstream- und/oder Downstream Signale im Netzwerk im Gegensatz zum Stand der Technik effizient umgesetzt werden können, insbesondere ohne Veränderung oder Austausch verschiedener Filtermodule (Diplexer) im Verstärker. Die Ausbildung des ersten und zweiten Leistungsteilers als ein System für die Impedanzrichtige additive und subtraktive Mischung (IASM-System) ermöglicht dabei eine optimale Trennung und Kombinierung der Upstream- und Downstream Signale. Gleichzeitig wird eine konstruktiv einfache und besonders kompakte Ausbildung der Vorrichtung ermöglicht.

In einer bevorzugten Ausführungsform ist der jeweilige Leistungsteiler bzw. das jeweilige IASM-System als 3-Tor-Leistungstransformator ausgebildet.

In einer bevorzugten Ausführungsform ist der erste Leistungsteiler mit einem Kabelfernseh- und/oder Breitbandnetzwerk verbindbar bzw. verbunden und der zweite Leistungsteiler mit einem Endnutzeranschluss verbindbar bzw. verbunden. Bevorzugt sind der erste und der zweite Leistungsteiler so miteinander verbunden, dass diese zwei getrennte Signalpfade, insbesondere für Upstream- und Downstream-Signale, zwischen den Leistungsteilern ausbilden, in welchen ein jeweiliges Verstärkerelement zur Verstärkung des Upstream- oder Downstream-Signals angeordnet ist. Vorzugsweise sind die getrennten Signalpfade unidirektional zur jeweiligen Übertragung eines Upstream- oder Downstream-Signals mit darin angeordneten unidirektionalen Verstärkerelementen ausgebildet.

In einer bevorzugten Ausführungsform ist der jeweilige Leistungsteiler in Form eines 3-Tor-Leistungstransformator als reziproker Leistungsteiler und -Kombinierer ausgebildet. Unter reziprok wird hierbei verstanden, dass der 3-Tor-Leistungstransformator nicht nur als Leistungsteiler, sondern auch als Kombinierer verwendet werden kann. Hierbei ist das System vorzugsweise in der Lage, sowohl zwei unterschiedliche Signale wie Downstream- und Upstream-Signale zu trennen als auch Upstream- und Downstream-Signale zu kombinieren.

In einer bevorzugten Ausführungsform ist der erste Leistungsteiler ausgebildet, eine Eingangsleistung bzw. ein vom Kabelfernseh- und/oder Breitbandnetzwerk kommendes Signal im Wesentlichen gleichmäßig als symmetrischer oder als unsymmetrischer Leistungsteiler auf zwei Ausgangsanschlüsse aufzuteilen. Diese sind dabei vorzugsweise mit den zwei, zwischen den Leistungsteilern ausgebildeten Signalpfaden verbunden. Der zweite Leistungsteiler ist dabei vorzugsweise ausgebildet, ein von den zwei Signalpfaden kommendes Signal zu kombinieren und das kombinierte Signal zur Weitergabe an einen Endnutzer- bzw. an einen Endnutzeranschluss auszugeben. Der symmetrische Aufbau des Leistungsteilers ermöglicht dabei eine optimale Entkopplung bzw. Isolation der beiden Ausgangsanschlüsse bzw. Ausgangstore am Leistungsteiler.

Die jeweiligen Verstärkerelemente im Upstream- und Downstream Pfad zwischen den beiden Leistungsteilern sind vorzugsweise unidirektional ausgebildet. Die Verstärkerelemente sind dabei in fachüblicher Weise zur jeweiligen Verstärkung eines Upstream- oder Downstream Signals im jeweiligen Pfad ausgebildet.

In einer bevorzugten Ausführungsform sind der erste und zweite Leistungsteiler kaskadenartig strukturiert aufgebaut. Hierunter wird eine Struktur mit einer Mehrzahl von Stufen des Leistungsteilers verstanden, welche zusammenarbeiten, um die gewünschte Leistungsaufteilung zu erzielen. Bevorzugt umfasst die kaskadenartige Struktur eine Hintereinanderschaltung mehrerer Leistungsteiler und -Kombinierer zur Bereitstellung eines Ultra-Breitband-LeistungsteilersZ-Kombinierers umfasst.

Der erste und zweite Leistungsteiler sind hierbei vorzugsweise analog kaskadenartig strukturiert aufgebaut und weisen hierbei aufeinander angepasste Tore auf, welche mit einem jeweiligen Upstream- und Downstream-Pfad verbunden sind. In einer bevorzugten Ausführungsform umfasst die kaskadenartige Struktur zwischen 3 und 15 Stufen, weiter bevorzugt zwischen 5 und 11 Stufen.

Vorteilhaft ist die kaskadenartige Struktur derart konfiguriert, dass diese den gesamten Frequenzbereich für die Anbindung an das Kabelfernseh- und/oder Breitbandnetzwerk, insbesondere den gesamten Frequenzbereich von DOCSIS 4.0 abdeckt. Hierbei sind vorzugsweise die jeweiligen Tore entsprechend angepasst, so dass eine hohe Isolation der Verstärkervorrichtung erzielt wird.

In einer bevorzugten Ausführungsform umfasst die Vorrichtung im jeweiligen Upstream- und/oder Downstream-Pfad zwischen dem ersten und zweiten Leistungsteiler Filterelemente. Insbesondere stellen die Filterelemente eine reflexionsfreie Filterstruktur im jeweiligen Pfad bereit. Die Filterstruktur ist dabei derart ausgebildet, dass diese minimale Reflexionen oder Rücckopplungen von Signalen an ihren Ein- und Ausgängen erzeugt. Hierdurch wir die Isolation der einzelnen Pfade erhöht und sichergestellt, dass ein Nutzsignal des jeweiligen anderen Pfades nicht beeinflusst wird.

In einer bevorzugten Ausführungsform umfasst eine Übertragungsleitung des ersten und/oder zweiten Leistungsteiler eine Artificial Transmission Line (ATL) oder ist als ATL ausgebildet. Die ATL umfasst vorzugsweise periodisch aneinandergereihte Leitungseinheiten, welche jeweils ein Leitungsstück und eine Shunt-Kapazität umfassen. Unter Anwendung der Shunt-Kapazitäten und der anschließenden Überführung der Leitungsstücke in diskrete Elemente ergibt sich eine künstlich erzeugte Verkürzung der Leitungslänge bei gleichbleibender elektrischer Länge. Hierdurch wird eine besonders kompakte Bauform des Leistungsteilers erzielt.

In einer bevorzugten Ausführungsform ist die Verstärkervorrichtung als auf einer Platine ausgebildete Schaltung realisiert. In einer weiteren, bevorzugten Ausführungsform ist die Verstärkervorrichtung als integrierte Leiterplatte bzw. integrierte Schaltung (IC) ausgebildet, weiter bevorzugt als Monolithic Microwave Integrated Circuit (MMIC) auf Chipebene. Hierdurch kann eine besonders kompakte Bauform der Vorrichtung realisiert werden.

In einem weiteren Aspekt betrifft die Erfindung die Verwendung der Verstärkervorrichtung wie vorgehend beschrieben zur Übertragung von Datensignalen, insbesondere mittels DOCSIS 3.0, DOCSIS 3.1 und/oder DOCSIS 4.0 oder einem höheren Standard, über Breitbandkabelnetz.

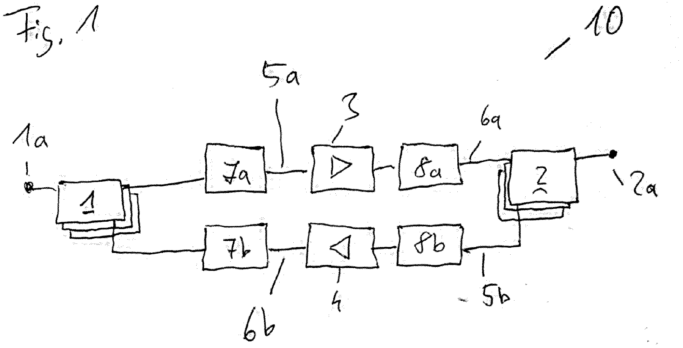

Einzelheiten, weitere vorteilhafte Wirkungen und Details der vorliegenden Erfindung werden nachfolgend anhand der rein schematischen Darstellung einer bevorzugten Ausführungsform der erfindungsgemäßen Verstärkervorrichtung in Fig. 1 erläutert.

Die erfindungsgemäße Verstärkervorrichtung 10 dient zur Anbindung eines Endnutzers- bzw. eines Endnutzergeräts an ein Kabelfernseh- und/oder Breitbandnetzwerk insbesondere zur Übertragung von Daten. Die Vorrichtung 10 umfasst einen ersten, mit einem Kabelfernseh- und/oder Breitbandnetzwerk verbindbaren Leistungsteiler 1 und einen zweiten, mit einem Endnutzer bzw. Endnutzergerät verbindbaren bzw. verbundenen Leistungsteiler 2. Der erste und zweite Leistungsteiler 1,2 sind dabei jeweils als ein System für die Impedanzrichtige additive und subtraktive Mischung (IASM-System) der Upstream und Downstream Signale ausgebebildet. Bevorzugt sind der erste und zweite Leistungstransformator als 3-Tor-Leistungstransformator ausgebildet. Der erste 3-Tor-Leistungstransformator 1 umfasst dabei einen eingangsseitigen Leitungsanschluss 1a und der zweite 3-Tor-Leistungstransformator 2 einen ausgangsseitigen Leitungsanschluss 2a. Die beiden 3-Tor-Leitungstransformatoren 1,2 sind dabei derart zusammengeschalten, dass sich zwischen jeweils zwei Toren der Leistungstransformatoren ein erster und zweiter Signalpfad 6a,6b ausbildet. Der jeweils erste und zweite 3-Tor-Leistungstransformator 1,2 sind dabei vorzugsweise als reziproker Teiler und Kombinierer ausgebildet. Der jeweilige 3-Tor-Leistungstransformator 1,2 funktioniert dabei in beide Richtungen gleichmäßig, wobei das Leistungsverhältnis zwischen den Toren vorzugsweise nicht von der Signalausbreitungsrichtung abhängt.

In dem ersten und zweiten Signalpfad 6a,6b sind vorzugsweise unidirektionale Verstärkerelemente 3,4 angeordnet, welche ausgebildet sind, ein jeweiliges Upstream- oder Downstream-Signal im ersten oder zweiten Signalpfad 6a,6b zu verstärken. Das Verstärkerelement 3 ist hierbei ausgebildet, ein im Signalpfad 6a übertragenes Downstream-Signal 5a zu verstärken. Das Verstärkerelement 4 ist ausgebildet, ein im Signalpfad 6b übertragenes Upstream-Signal 5b zu verstärken.

Im jeweiligen Signalpfad 6a,6b sind weiter bevorzugt Filterelemente 7a,7b und 8a,8b angeordnet. Die Filterelemente 7a,7b sind dabei dem ersten 3-Tor-Leistungstransformator 1 zugeordnet, wobei jeweils ein Filterelement 7a,7b in einem jeweiligen Signalpfad 6a,6b angeordnet ist. Die Filterelemente 7a,7b umfassen vorzugsweise einen Hochpassfilter 7a, welcher im ersten Signalpfad 6a angeordnet ist und einen Tiefpassfilter 7b, welcher im zweiten Signalpfad angeordnet ist.

Die weiteren Filterelemente 8a,8b sind dabei dem zweiten 3-Tor-Leistungstransformator 2 zugeordnet, wobei jeweils ein Filterelement 8a,8b in einem jeweiligen Signalpfad 6a,6b angeordnet ist. Die Filterelemente 8a,8b umfassen vorzugsweise einen Hochpassfilter 8a, welcher im ersten Signalpfad 6a angeordnet ist und einen Tiefpassfilter 8b, welcher im zweiten Signalpfad 6b angeordnet ist. Die bereitgestellten Filter bilden vorzugsweise eine reflexionsfreie Filterstruktur aus, welche eine erhöhte Isolation der einzelnen Pfade 6a,6b ermöglicht.

Der erste, eingangsseitige 3-Tor-Leistungstransformator 1 ist dabei derart ausgebildet, dass eine anliegende Eingangsleistung möglichst gleichmäßig (1:1) als symmetrischer oder als unsymmetrischer (1:X) Teiler/ Kombinierer verlustfrei auf zwei Ausgangsanschlüsse bzw. Ausgangstore aufgeteilt wird. Durch die reziproke Ausbildung ist der 3-Tor-Leistungstransformator in der Lage, sowohl zwei unterschiedliche Signale, insbesondere Upstream- und Downstream-Signale 5a,5b, zu trennen als auch zu kombinieren. Des Weiteren sind die Ausgangstore aufgrund ihres symmetrischen Aufbaus und der dadurch bedingten destruktiven Überlagerung hoch entkoppelt bzw. isoliert voneinander.

Der zweite, ausgangsseitige 3-Tor-Leistungstransformator 2 ist analog zum ersten 3-Tor-Leistungstransformator aufgebaut, wobei dieser für ausgehende Signale bzw. Upstream-Signale dem Ausgangsverstärkerelement 4 vorgeschalten ist.

In einer besonders bevorzugten Ausführungsform sind der erste und zweite 3-Tor-Leistungstransformator 1,2 kaskadenartig strukturiert aufgebaut und umfassen dabei vorzugsweise mehrere (N+1) hintereinandergeschaltete Teiler/-Kombinierer S1,S2,S3. Hierdurch wird jeweils ein Ultra-Breitband-Leistungsteiler/-Kombinierer bereitgestellt, welcher insbesondere über den gesamten geforderten Frequenzbereich von DOCSIS, bei allseits angepassten Toren eine hohe Isolation aufweist. Die allseits angepassten Tore verhindern dabei eine Beeinflussung des zu verstärkenden Systems. Die kaskadierte 3-Tor-Architektur weist jeweils im Upstream- oder Downstream-Pfad 6a,6b eine reflexionsfreie Filterstruktur 7a,7b,8a,8b auf. Diese reflexionsfreie Filterstruktur erhöht die Isolation der einzelnen Pfade 6a,6b, indem sie so konstruiert ist, dass sie minimale Reflexionen oder Rückkopplungen von Signalen an ihren Ein- und Ausgängen erzeugt.

Eine Übertragungsleitung des ersten und/oder zweiten 3-Tor-Leistungstransformators 1,2 ist vorzugsweise als Artificial Transmission Line (ATL) ausgebildet (nicht gezeigt). Die ATL umfasst dabei vorzugsweise periodisch aneinandergereihte Leitungseinheiten, welche jeweils ein Leitungsstück und eine Shunt-Kapazität umfassen. Hierdurch ergibt sich eine künstlich erzeugte Verkürzung der Leitungslänge bei gleichbleibender elektrischer Länge, wodurch eine besonders kompakte Bauform des 3-Tor-Leistungstransformators erzielt wird.

Die vorliegende Erfindung ist nicht auf das gezeigte Ausführungsbeispiel beschränkt und umfasst insbesondere weitere, von dem gezeigten Ausführungsbeispiel abweichende Ausführungsformen.

### Bezugszeichenliste

- 1: erster 3-Tor-Leistungstransformator
- 1a: eingangsseitiger Leitungsanschluss
- 2: zweiter 3-Tor-Leistungstransformator
- 2a: ausgangsseitiger Leitungsanschluss
- 3: erstes Verstärkerelement für Downstream
- 4: zweites Verstärkerelement für Upstream
- 5a: Downstream-Signal
- 5b: Upstream-Signal
- 6a: erster Signalpfad
- 6b: zweiter Signalpfad
- 7a,b: Filterelemente erster 3-Tor-Leistungstransformator
- 8a,8b: Filterelemente zweiter 3-Tor-Leistungstransformator
- 10: Verstärkervorrichtung
- S1,S2,S3: kaskadierte Struktur Leistungstransformator

## Patentansprüche

1. Verstärkervorrichtung (10) zur Anbindung an ein Kabelfernseh- und/oder Breitbandnetzwerk aufweisend einen ersten und zweiten Leistungsteiler (1,2) und zwischen diesen angeordnete Verstärkerelemente (3,4) zur jeweiligen Verstärkung eines Upstream oder Downstream-Signals (5a,5b), **dadurch gekennzeichnet, dass** der erste und zweite Leistungsteiler (1,2) jeweils als ein System für die impedanzrichtige additive und subtraktive Mischung der Upstream und Downstream Signale ausgebebildet ist.

2. Verstärkervorrichtung nach Anspruch 1, **dadurch gekennzeichnet, dass** der erste und zweite Leistungsteiler (1,2) jeweils als 3-Tor-Leistungstransformartor ausgebildet ist.

3. Verstärkervorrichtung nach Anspruch 1 oder 2, **dadurch gekennzeichnet, dass** der erste und zweite Leistungsteiler (1,2) so miteinander verbunden sind, dass diese zwei getrennte Signalpfade (6a,6b), insbesondere für Upstream- und Downstream-Signale (5a,5b), zwischen den Leistungsteilern (1,2) ausbilden, in welchen ein jeweiliges Verstärkerelement (3,4) zur Verstärkung des Upstream- oder Downstream-Signals (5a,5b) angeordnet ist.

4. Verstärkervorrichtung nach einem der Ansprüche 1 bis 3, **dadurch gekennzeichnet, dass** der Leistungsteiler (1,2) als reziproker Leistungsteiler und -Kombinierer ausgebildet ist.

5. Verstärkervorrichtung nach einem der Ansprüche 1 bis 4, **dadurch gekennzeichnet, dass** der erste Leistungsteiler (1) ausgebildet ist, eine Eingangsleistung im Wesentlichen gleichmäßig als symmetrischer oder als unsymmetrischer Leistungsteiler auf zwei Ausgangsanschlüsse aufzuteilen.

6. Verstärkervorrichtung nach einem der vorhergehenden Ansprüche, **dadurch gekennzeichnet, dass** der erste und zweite Leistungsteiler (1,2) kaskadenartig strukturiert (S) aufgebaut sind.

7. Verstärkervorrichtung nach Anspruch 6, **dadurch gekennzeichnet, dass** die kaskadenartige Struktur (S) eine Hintereinanderschaltung mehrerer Leistungsteiler und -Kombinierer (S1,S2,S3), zur Bereitstellung eines Ultra-Breitband-LeistungsteilersZ-Kombinierers umfasst.

8. Verstärkervorrichtung nach einem der vorhergehenden Ansprüche, **dadurch gekennzeichnet, dass** die Verstärkervorrichtung (10) im jeweiligen Upstream- und/oder Downstream Pfad (6a,6b) zwischen dem ersten und zweiten Leistungsteiler (1,2) eine reflexionsfreie Filterstruktur (7a,7b,8a,8b) aufweist.

9. Verstärkervorrichtung nach einem der vorhergehenden Ansprüche, **dadurch gekennzeichnet, dass** eine Übertragungsleitung des ersten und/oder zweiten Leistungsteiler als Artificial Transmission Line (ATL) ausgebildet ist.

10. Verstärkervorrichtung nach Anspruch 9, **dadurch gekennzeichnet, dass** die Artificial Transmission Line (ATL) periodisch aneinandergereihte Leitungseinheiten umfasst, welche jeweils ein Leitungsstück und eine Shunt-Kapazität umfassen.

11. Verstärkervorrichtung nach einem der vorhergehenden Ansprüche, **dadurch gekennzeichnet, dass** die Verstärkervorrichtung (10) als integrierte Leiterplatte auf Chipebene ausgebildet ist.

12. Verwendung der Verstärkervorrichtung nach einem der Ansprüche 1 bis 11 zur Übertragung von Datensignalen, insbesondere mittels DOCSIS 3.0, DOCSIS 3.1, und/oder DOCSIS 4.0 über Breitbandkabelnetzwerk.
